# EUROPÄISCHE PATENTSCHRIFT

(11) **EP 0 613 906 B1**
(45) Veröffentlichungstag und Bekanntmachung des Hinweises auf die Patenterteilung: **14.05.1997**
(21) Anmeldenummer: 94103132.0
(22) Anmeldetag: 02.03.1994
(51) Int. Cl.: C08B 30/10, C08L 97/02

(54) **Förmkörper, insbesondere in Form einer Faserplatte**
Moulded article, especially in the form of a fibre board
Article moulé, en particulier en forme de panneau de fibres

(30) Priorität: 02.03.1993 DE 4306439; 29.11.1993 DE 4340518
(43) Veröffentlichungstag der Anmeldung: 07.09.1994
(73) Patentinhaber: PFLEIDERER UNTERNEHMENSVERWALTUNG GmbH & Co KG, 92304 Neumarkt/Opf. (DE)
(72) Erfinder: Kharazipour, Alireza, Dr., D-37079 Göttingen (DE); Hüttermann, Aloys, Prof. Dr., D-37075 Göttingen (DE); Trojanowski, Jerzy, Prof. Dr., D-37077 Göttingen (DE); Nonninger, Kurt, Dr., D-59469 Ense (DE)
(74) Vertreter: Harders, Gerhard, Dr.

(56) Entgegenhaltungen:
- WO-A-91/05020
- DE-A- 239 698
- DE-A- 4 020 969
- FR-A- 842 167
- GB-A- 506 929
- STARKE. Bd. 32, Nr. 1 , 1980 , WEINHEIM DE Seiten 14 - 20 W. KEMPF 'Beitrag zur mechanischen Entwässerung von Kartoffelpülpe'

## Beschreibung

Die vorliegende Erfindung betrifft einen Formkörper, insbesondere in Form einer Faserplatte, auf der Basis von Holz- oder Cellulosefasern.

Faserplatten auf der Basis von Holzfasern sind bekannt. Sie werden aus Holzfasern unter Zugabe von Bindemitteln hergestellt. Als Bindemittel dienen Kunstharzbindemittel oder Bindemittel auf Enzymbasis, wie sie beispielsweise in der DE 30 37 992 C2 beschrieben sind.

Aufgabe der vorliegenden Erfindung ist es, einen Formkörper, insbesondere in Form einer Faserplatte, zu schaffen, der keines der vorbekannten Bindemittel benötigt.

Gelöst wird diese Aufgabe durch einen gattungsgemäßen Formkörper gemäß dem Kennzeichen des Hauptanspruchs. Die Unteransprüche gebe bevorzugte Ausgestaltungen der Erfindung wieder.

Kartoffelpülpe ist ein Abfallprodukt der Stärkeindustrie, das in großen Mengen anfällt. Sie besteht aus der zerkleinerten Kartoffelschale und den Resten des Fruchtfleisches, denen die Kartoffelstärke entzogen worden ist. Versuche haben ergeben, daß Kartoffelpülpe in der bei der Stärkeproduktion anfallenden Form keinerlei Bindungswirkung auf pflanzliche oder tierische Fasern ausübt.

Kartoffelpülpe weist im allgemeinen eine mittlere Teilchengröße von 0,5 bis 1,2 mm. Die obere Grenze der Teilchengröße liegt im allgemeinen bei etwa 1,7 mm, die untere Grenze bei etwa 0,4 mm, jeweils in Abhängigkeit von den Bedingungen bei der Verarbeitung. Aus der Stärkegewinnung stammende Kartoffelpülpe übt auf pflanzliche oder tierische Fasern keine Bindungswirkung aus.

Überraschenderweise wurde gefunden, daß im Gegensatz hierzu Kartoffelpülpe, die durch eine mechanische Zerkleinerung vorbehandelt oder die mit Enzymen vorbehandelt worden ist, die die Faserstruktur der Kartoffelpülpe beeinflussen, eine Bindungswirkung auf tierische und pflanzliche Fasern ausüben.

Die erfindungsgemäßen Formkörper enthalten 99 bis 50 Gew.-% Fasern und 1 bis 50 Gew.-% der vorbehandelten Kartoffelpülpe, wobei die Angaben in Gew.-% sich auf Trockensubstanz beziehen. Bevorzugt ist ein Gehalt von 97 bis 70 Gew.-% Fasern und 3 bis 30 Gew.-% vorbehandelter Kartoffelpülpe, insbesondere ein Gehalt von 90 bis 80 Gew.-% Fasern und 10 bis 20 Gew.-% vorbehandelter Kartoffelpülpe.

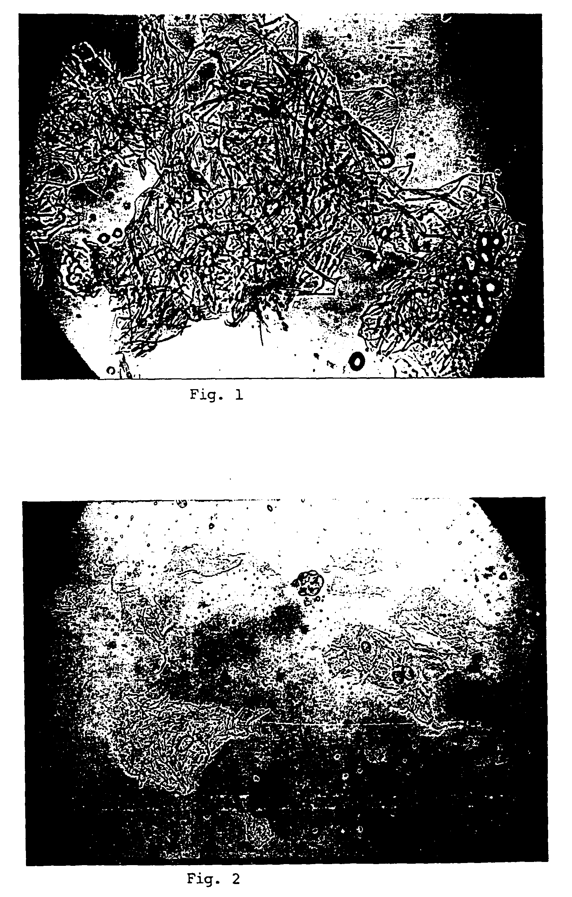

Als Enzyme werden dabei vorzugsweise solche eingesetzt, die die Faserstruktur der Kartoffelpülpe beeinflussen. Diese Beeinflussung besteht insbesondere in einem Abbau der Faserstruktur. Beispiele solche Enzyme sind u. a. Pektinasen, Hemicellulasen und/oder Cellulasen. Unter den Pektinasen sind insbesondere zu nennen:
Pektintranseliminasen, Polygalakturonasen, Pektinesterasen und dergleichen,
Hemicellulasen sind beispielsweise Xylanasen, Mannasen, Arabinasen und dergleichen.
Beim Einsatz solche Enzyme wird die Faserstruktur der Pülpeteilchen nahezu völlig aufgelöst. Dies zeigt ein Vergleich der Abb. 1 (vor der Enzymbehandlung) mit der Abb. 2 (nach der Enzymbehandlung).

Die Enzyme werden in einer Menge eingesetzt, die ausreicht, um die Faserstruktur der Kartoffelpülpe in wirtschaftlich verwertbaren Zeiträumen abzubauen. Bei Verwendung von Pektinasen sind dies beispielsweise 0,1 bis 1000 Units pro g Kartoffelpülpe Trockensubstanz, insbesondere etwa 1 bis 100 Units. Dabei ist die Einheit der Pektinase Pektin-Transeliminase z. B. definiert als diejenige Menge des Enzyms, die eine Zunahme der Absorption bei 235 nm um 0,555/1 min in einer 1cm-Meßkuvette bei pH 5,2 und 25° katalysiert, wobei als Substrat eine 0,5%ige Pektinlösung verwendet wird.

Enzymlösungen, die neben Pektinase auch Hemicellulase enthalten, sind im Handel erhältlich, beispielsweise in Form der Handelsware Pektinex.

Beim Einsatz von Holzfasern werden solche Holzfasern eingesetzt, die lediglich mechanisch zerfasert wurden, deren native Struktur also weder mechanisch noch chemisch wesentlich verändert wurde. Beim Einsatz von Cellulosefasern werden vorzugsweise Cellulosefasern in der Form eingesetzt, wie sie bei der Zellstoffgewinnung in üblicher Weise anfallen.

Die erfindungsgemäßen Formkörper können hergestellt werden, indem die Faser durch bekannte Verfahren, wie Tauchen oder Besprühen mit der vorbehandelten Pülpe in Kontakt gebracht wird, nach Bedarf auf eine Restfeuchte von weniger als 100 Gew.-% vorgetrocknet, zu einer Matte gestreut, gekämmt und nach Bedarf vorverdichtet und unter Einwirkung von Wärme und Druck zu einem Formkörper verpreßt wird.

Anstelle einer durch Enzyme vorbehandelten Kartoffelpülpe wird auch durch eine Kartoffelpülpe, die durch eine mechanische Zerkleinerung auf eine Teilchengröße von weniger als 350µm zerkleinert worden ist, eine gute Bindungswirkung auf Holz- und/oder Cellulosefasern ausübt. Dies gilt insbesondere für vliesartige oder papierartige Faser-Flächengebilde, in die nicht zerkleinerte Pülpeteilchen offensichtlich nicht im erforderlichen Maß eindringen können.

Die eingesetzten Pülpeteilchen müssen auf eine Teilchengröße von weniger als 350µm zerkleinert werden. Bevorzugt werden sie auf eine noch geringere Teilchengröße zerkleinert, beispielsweise auf weiniger als 300µm.

Beim Einsatz von Holzfasern werden solche Holzfasern eingesetzt, die lediglich mechanisch zerfasert wurden, deren native Struktur also weder mechanisch noch chemisch wesentlich verändert wurde. Beim Einsatz von Cellulosefasern werden vorzugsweise Cellulosefasern in der Form eingesetzt, wie sie bei der Zellstoffgewinnung in üblicher Weise anfallen.

Je kleiner die Teilchengröße der Pülpeteilchen ist, um so besser ist ihr Penetrationsvermögen zwischen die Faserlagen und damit ihre Bindungswirkung. Jedoch ist eine Zerkleinerung auf mittlere Teilchengrößen von weniger als 100 µm bereits sehr aufwendig und wird daher nur in speziellen Fällen sinnvoll sein.

Zur Zerkleinerung der Pülpeteilchen eignen sich alle bekannten Verfahren, insbesondere mechanische Verfahren. Solche Verfahren sind beispielsweise Zerkleinerung in einem Mischer, Waring-Blendor, in Kugelmühlen, insbesondere Rührwerkskugelmühlen, oder in Homogenisatoren, insbesondere Hochdruckhomogenisatoren, oder Tiefgefrieren und anschließendes Vermahlen. Die vorliegende Erfindung eignet sich insbesondere zur Herstellung von folienartigen oder plattenartigen Flächengebilden.

Die Kartoffelpülpe kann mit beliebigen Wassergehalten eingesetzt werden, solange genügend wässrige Phase zugegen ist, um die Einwirkung des Enzyms zu gewährleisten. Üblicherweise beträgt der Trockensubstanzgehalt der wässrigen Suspension bzw. Lösung 2 bis 25 %, bevorzugt 3 bis 10 Gew.-%. Ein Trockensubstanzgehalt von weniger als 2 Gew.-% erfordert einen unwirtschaftlichen nachträglichen Trocknungsaufwand. Der Trockensubstanzgehalt kann dabei so ausgewählt werden, daß die vorbehandelte Kartoffelpülpe direkt im folgenden Schritt für die Herstellung des Formkörpers eingesetzt werden kann.

Vorteilhafterweise kann die Kartoffelpülpe vor und/oder nach der Behandlung mit den Enzymen mechanisch zerkleinert werden. Dadurch wird die Löslichkeit bzw. Suspensionsfähigkeit verbessert und die gegebenenfalls nachfolgende Enzymbehamdlung erleichtert bzw. beschleunigt.

Durch einen Zusatz von Wasserglas kann die Benetzbarkeit der eingesetzten Fasern verbessert werden. Wasserglas wird in Mengen von 0,5 bis 5 Gew.-%, vorzugsweise 1 bis 3 Gew.-%, bezogen auf das Fasergewicht, eingesetzt.

Die vorliegende Erfindung eignet sich insbesondere zur Herstellung von folienartigen oder plattenartigen Flächen gebilden, aus denen Formkörper hergestellt werden können.

Zur Herstellung der Formkörper wird die Kartoffelpülpe, die die bei der Stärkegewinnung im allg. mit einem Wassergehalt von 75 bis 95 % anfällt, zunächst nach Bedarf auf einen Feststoffgehalt von weniger als 15 Gew.-% verdünnt. Im allgemeinen wird mit Pülpe gearbeitet, die einen Feststoffgehalt von weniger als 10 Gew.-% aufweist. Die Pülpe kann auch in Form der sogenannten Preßpülpe eingesetzt werden, die einen Feststoffgehalt von 15 bis 25 Gew.-% aufweist. Sie muß wie oben angegeben verdünnt werden.

Die vorbehandelte Kartoffelpülpe wird mit bekannten Verfahren, wie Tränken, Besprühen oder dergleichen auf die Fasern aufgebracht.

Die mit Pülpelösung getränkten Fasern können dann thermisch oder auf mechanischem Wege, z. B. durch Abpressen, oder dergleichen, von überschüssigem Wasser befreit werden.

Dann erfolgt eine Druck- und Wärmebehandlung, die nacheinander, aber auch gleichzeitig erfolgen kann. Die Wärmebehandlung erfolgt bei Temperaturen von 150 bis 220°C, vorzugsweise bei 160 bis 200°C. Bei diesen Temperaturen erfolgt eine Bindung zwischen den Fasern und den Pülpeteilchen, die in ihrer Wirkung der Bindung mit konventionellen Kunstharzbindemitteln durchaus gleichwertig ist.

Die kombinierte Druck- und Temperaturbehandlung kann vorzugsweise in den üblicherweise eingesetzten Plattenpressen durchgeführt werden, wie sie bei der Herstellung von Span- oder Faserplatten eingesetzt werden. Dabei werden die hierbei üblichen Druck- und Temperaturbedingungen eingehalten.

Die erfindungsgemäßen Formkörper erfüllen in Form von Faserplatten die allgemein geltenden Vorschriften, beispielsweise die DIN-Normen, für solche Platten, z.B. für Naßfestigkeit, Querzugfestigkeit, Biegefestigkeit usw.

Faserplatten lassen sich beispielsweise wie folgt herstellen:

Die Fasern werden in einer Beleimungstrommel mit der vorbehandelten Pülpe besprüht, auf eine bestimmte Restfeuchte (z.B. weniger als 100 bzw. 50 Gew-%) vorgetrocknet, zu einer Matte gestreut, gekämmt und verpreßt. Die Preßtemperaturen liegen dabei zwischen 160 und 200°C, vorzugsweise zwischen 180 und 190°C. Die Preßdrucke liegen zwischen 1,96∗10⁷ und 3,92∗10⁷ Pa (20 und 40 kp/cm²).

Die erfindungsgemäßen Formkörper können weitere übliche Zusatzstoffe enthalten. So können z. B. Wachse zugesetzt werden, mit denen sich die Hydrophilie bzw. Hydrophobie beeinflussen läßt. Weitere mögliche Zusatzstoffe sind beispielsweise Farbstoffe oder Fungizide, Biozide und dergleichen, die den Befall von Mikroorganismen steuern können, sowie Substanzen, die die Benetzbarkeit der der Fasern verbessern, wie oberflächenaktive Stoffe, Wasserglas und dergleichen.

Die Erfindung wird nachfolgend anhand der Beispiele näher erläutert.

### Beispiel 1

### Herstellung einer MDF-Platte

Kartoffelpülpe wurde in einem Homogenisator auf eine mittlere Teilchengröße von etwa 300 µm zerkleinert. Aus der Pülpe wurde folgende Zusammensetzung hergestellt:

| | |
|---|---|
| 200 g | vorbehandelte Pülpe (20 Gew.-% Feststoff) |
| 1100 ml | Wasser |
| 1 % | Bienenwachs-Emulsion in 50 % Wasser |

Die Komponenten wurden zusammengegeben und in einem Homogenisator 15 min gemischt.

Die Mischung wurde in einer Beleimungstrommel auf 550 g Holzfaser mit einer Restfeuchte von 7 Gew.-% aufgesprüht. Anschließend wurde durch 6 min langes Trocknen bei 190°C auf eine Restfeuchte von 25 % vorgetrocknet.

Das Material wurde zu einer Matte gestreut, gekämmt und 7 min bei einer Temperatur von 190°C und einem Druck von 30 kp/cm² zu einer MDF-Platte mit einer Dicke von 5 mm verpreßt.

Die so hergestellten Fas-erplatten hatten folgende Eigenschaften:

| Rohdichte kg/m³ | Quellung % | | Querzugfestigkeit N/mm |
|---|---|---|---|
| | 2h | 24h | |
| 800 | 5,5 | 20 | 0,33 |
| 900 | 5,6 | 17 | 0,67 |
| 860 | 6,4 | 19,6 | 0,67 |

in einem entsprechenden Parallelversuch, in dem nach dem gleichen Verfahren mit nicht vorbehandelter Pülpe gearbeitet worden war, hatten die so hergestellten Platten folgende Eigenschaften:

| Rohdichte kg/m³ | Quellung % | | Querzugfestigkeit N/mm |
|---|---|---|---|
| | 2h | 24h | |
| 777 | 9,2 | 25,5 | 0,18 |
| 874 | 4,5 | 75,2 | 0,19 |

### Beispiel 2

1540 g Kartoffel-Naßpülpe mit einem Trockensubstanzgehalt von 13 %, entsprechend 200 g Trockensubstanz, wurden in einem Mischer mit 1540 ml Wasser gemischt und 20 ml Pektinase- mit 17,86 g Trockensubstanz (TS) in wässriger Lösung mit einer Aktivität von 3000 U/ml (Handelsprodukt Pektinex 3 XL) zugegeben. Die Suspension wurde 20 h in einem Fermenter bei 40° inkubiert. Anschließend wurde die Mischung 10 min in einem Homogenisator homogenisiert und dabei mechanisch zerkleinert.

Die Pülpe wurde vor der Behandlung, nach der Enzymbehandlung und nach der mechanischen Behandlung mikroskopisch untersucht. Dabei wurden die folgenden Ergebnisse erhalten:

| Mikroskopische Untersuchung mit einer Thomaskammer | | | |
|---|---|---|---|
| | Teilchengröße mm | Teilchenanzahl in 1 mm³ | Viskosität mPs.sec |
| Pülpe, unbehandelt | 0,77 1) | 1687 | 1000 |
| Pülpe, behandelt mit Pektinex | 0,17 2) | 3575 | 175 |
| Pülpe, behandelt mechanisch und mit Pektinex | 0,14 2) | 3997 | 105 |

| | | | |
|---|---|---|---|
| 1) Faser-Teilchen Aggregate | | | |
| 2) keine Fasern, klumpige Strukturen | | | |

In den folgenden Beispielen wurde die nach Beispiel 2 erhaltene mit Enzym und mechanisch vorbehandelte Pülpesuspension eingesetzt.

### Beispiel 3

2000 g Holzfasern wurden in eine Beleimungsmaschine gefüllt und mit 3850 ml der Pülpesuspension aus Beispiel 2 besprüht. Die Feuchte der Fasern betrug nach der Beleimung ca. 180 %. Anschließend wurde das Fasermaterial 8 h bei 50° getrocknet, die Restfeuchte betrug dann 16 %. Es wurden mehrere Platten mit einer Dicke von 6 mm gepreßt.

| | |
|---|---|
| Einwaage pro Platte: | 800 g |
| Preßzeit: | 5 min |
| Preßtemperatur: | 190° |

Die Platten hatten die folgenden Eigenschaften:

| Dicke mm | Quellung % 24h | Rohdichte kg/m³ | Querzugfestigkeit N/mm² |
|---|---|---|---|
| 5,5 | 34 | 900 | 0,47 |
| 5,6 | 33 | 900 | 0,44 |

### Beispiel 4

Wie in Beispiel 3 wurden Holzfasern in einer Beleimungsmaschine mit Pülpesuspension beleimt.

Eingesetzt wurden 2000 g Fasern und 3080 ml Pülpesuspension. Feuchte der Faser nach der Beleimung: ca. 160 % Nach Trocknen 7 h bei 40° Restfeuchte 15 %.

| | |
|---|---|
| Einwaage pro Platte: | 700 g |
| Preßzeit: | 5 min |
| Preßtemperatur: | 190° |

Die Platten hatten folgende Eigenschaften:

| Dicke mm | Quellwert % 24h | Rohdichte kg/m³ | Querzugfestigkeit N/mm² |
|---|---|---|---|
| 4,1 | 26 | 1000 | 1,16 |
| 4,0 | 30 | 1000 | 1,42 |

### Beispiel 5

Herstellung von 5 mm MDF-Platten

Herstellung wie in Beispiel 3

Eingesetzt wurden 2000 g Fasern und 1540 ml Pülpsuspension. Feuchte der Faser nach Beleimung: ca. 160 % Nach Trocknen 7 h bei 40° Restfeuchte 15 %.

| | |
|---|---|
| Einwaage pro Platte: | 700 g |
| Preßzeit: | 5 min |
| Preßtemperatur: | 190° |

Platteneigenschaften:

| Dicke mm | Quellwert h 24 | Rohdichte kg/m³ | Querzugfestigkeit N/mm² |
|---|---|---|---|
| 4,32 | 40,51 | 1127 | 0,65 |
| 3,92 | 25,51 | 1168 | 1,62 |
| 4,11 | 33,09 | 982 | 1,37 |

### Beispiel 6

### Durchführung wie Beispiel 3

1000 g Fasern, 400 ml Pülpesuspension, Feuchte der Fasern nach Beleimung: 45 %.
Trocknen 20 h bei Raumtemperatur, Restfeuchte 15 %.

| Dicke mm | Quellwerte h 24 | Rohdichte kg/m³ | Querzugfestigkeit N/mm² |
|---|---|---|---|
| 4,14 | 33,09 | 1128 | 1,50 |

## Patentansprüche

1. Formkörper, insbesondere in Form einer Faserplatte, auf der Basis von Holz- und/oder Cellulosefasern,
**dadurch gekennzeichnet, daß**
er
99 bis 50 Gew.-% Fasern und
1 bis 50 Gew.-% einer vorbehandelten Kartoffelpülpe
enthält, wobei die Angaben in Gew.-% sich auf Trockensubstanz beziehen, und
die Kartoffelpülpe durch Einwirkung von Enzymen, die die Faserstruktur der Kartoffelpülpe beeinflussen, vorbehandelt wird, oder
die Teilchen der Kartoffelpülpe durch die Vorbehandlung auf eine mittlere Teilchengröße von weniger als 350 µm zerkleinert worden sind.

2. Formkörper nach Anspruch 1, dadurch gekennzeichnet, daß die Enzyme aus Pektinasen, Hemicellulasen und/oder Cellulasen bestehen.

3. Formkörper nach mindestens einem der Ansprüche 1 bis 2,
dadurch gekennzeichnet, daß
die Kartoffelpülpe in wässriger Suspension mit einem Trockensubstanzgehalt von 2 bis 25 Gew.-% einer Enzymbehandlung unterworfen wurde.

4. Formkörper nach mindestens einem der Ansprüche 1 bis 3,
dadurch gekennzeichnet, daß
als Enzym Pektinase von 0,1 bis 1000 U/g Kartoffelpülpe (TS) eingesetzt wird.

5. Formkörper nach mindestens einem der Ansprüche 1 bis 4,
dadurch gekennzeichnet, daß
er
97 bis 70 Gew.-% Fasern und
3 bis 30 Gew.-% vorbehandelte Kartoffelpülpe
enthält.

6. Formkörper nach mindestens einem der Ansprüche 1 bis 4,
dadurch gekennzeichnet, daß
er
90 bis 80 Gew.-% Fasern und
10 bis 20 Gew.-% vorbehandelte Kartoffelpülpe
enthält.

7. Formkörper nach Anspruch 1, dadurch gekennzeichnet, daß die Teilchen der Kartoffelpülpe auf eine mittlere Teilchengröße von weniger als 300 µm zerkleinert worden sind.

8. Verfahren zur Herstellung eines Formkörpers nach mindestens einem der Ansprüche 1 bis 7, dadurch gekennzeichnet, daß
die Faser durch bekannte Verfahren, wie Tauchen, Besprühen, mit der vorbehandelten Pülpe in Kontakt gebracht wird,
nach Bedarf auf eine Restfeuchte von weniger als 100 Gew.-% vorgetrocknet wird,
zu einer Matte gestreut, gekämmt und nach Bedarf vorverdichtet wird, und
unter Einwirkung von Wärme und Druck zu einem Formkörper verpreßt wird.

9. Verfahren nach Anspruch 8, dadurch gekennzeichnet, daß bei Temperaturen von 160 bis 200°C und einem Druck von 2,94∗10⁷ Pa (30 kp/cm²) oder mehr verpreßt wird.

10. Verfahren zur Vorbehandlung der eingesetzten Kartoffelpülpe, dadurch gekennzeichnet, daß
vor und/oder nach der Enzymbehandlung eine mechanische Zerkleinerung durchgeführt wird.

11. Verfahren nach Anpruch 10, dadurch gekennzeichnet, daß die mechanische Zerkleinerung in einer Mühle oder einem Homogenisator durchgeführt wird.

12. Verfahren nach Anspruch 8, dadurch gekennzeichnet, daß auf eine Restfeuchte von weniger als 50 Gew.-% vorgetrocknet wird.

## Claims

1. Moulded article, especially in the form of a fibre board, on the basis of wood and/or cellulose fibres,
**characterized in that**
it contains
99 to 50 % by weight of fibres, and
1 to 50 % by weight of a pre-treated potato pulp,
with these weight percentages being related to the dry matter, and
that the potato pulp is subjected to pre-treatment under the action of enzymes taking an influence on the fibrous structure of the potato pulp, or
that the particles of the potato pulp were subjected to pre-treatment for comminution to a mean particle size of less than 350 µm.

2. Moulded article according to Claim 1, **characterised in** that said enzymes consist of pectinases, hemicellulases and/or cellulases.

3. Moulded article according to at least one of Claims 1 to 2, **characterised in** that the potato pulp in an aqueous suspension at a concentration of dry matter in the range from 2 to 25 % by weight was subjected to enzymatic treatment.

4. Moulded article according to at least one of Claims 1 to 3, **characterised in** that pectinase of 0.1 to 1000 U/g of potato pulp (TS) is used as enzyme.

5. Moulded article according to at least one of Claims 1 to 4, **characterised in** that it contains
97 to 70 % by weight of fibres, and
3 to 30 % by weight of pre-treated potato pulp.

6. Moulded article according to at least one of Claims 1 to 4, **characterised in** that it contains
90 to 80 % by weight of fibres, and
10 to 20 % by weight of pre-treated potato pulp.

7. Moulded article according to Claim 1, **characterised in** that the potato pulp particles are previously subjected to comminution to a mean particle size of less than 300 µm.

8. Process for producing a moulded article according to at least one of Claims 1 to 7, **characterised in** that
the fibre is contacted with the pre-treated pulp by known methods such as dipping or spraying,
a pre-drying step is performed, if necessary, to reduce the residual moisture down to less than 100 % by weight,
the material is spread so as to form a mat, combed and subjected to pre-compression, if necessary, and
is compressed under the action of heat and pressure so as to form a moulded article.

9. Process according to Claim 8, **characterised** in that compression is performed at temperatures of 160 to 200 °C and under a pressure of 2.94 x 10⁷ Pa (30 kp/cm²).

10. Process for pre-treating the utilised potato pulp, **characterised in** that a mechanical comminution is performed before and/or after the enzymatic treatment.

11. Process according to Claim 10, **characterised in** that the mechanical comminution is performed in a mill or in a homogenizer.

12. Process according to Claim 8, **characterised in** that pre-drying is performed for a reduction of the residual moisture down to less than 50 % by weight.

## Revendications

1. Article moulé, en particulier en forme de panneau de fibres, à la base de fibres ligneuses et/ou de cellulose,
**caractérisé en ce qu**'il contient
99 à 50 % en poids de fibres, et
1 à 50 % en poids de pâte de pommes de terre traitée au préalable,
ces pourcentages en poids étant relatifs à la matière sèche, et
en ce que la pâte de pommes de terre est soumise à un traitement préparatoire sous l'effet des enzymes, qui prennent de l'influence sur la structure fibreuse de la pâte de pommes de terre ou
en ce que les particules de la pâte de pommes de terre étaient soumises à un traitement préparatoire pour leur fragmentation à une grandeur moyenne de particules de moins de 300 µm.

2. Article moulé selon la revendication 1, **caractérisé en ce** que lesdits enzymes consistent en des pectinases, hemicellulases et/ou cellulases.

3. Article moulé selon au moins une des revendications 1 à 2, **caractérisé en ce** que la pâte de pommes de terres, en une suspension aqueuse, à une concentration de matière sèche entre 2 et 25 % en poids, subit un traitement préparatoire par des enzymes.

4. Article moulé selon au moins une des revendications 1 à 3, **caractérisé en ce** que de la pectinase à 0.1 à 1000 U/g de la pâte de pommes de terre (TS) est utilisée comme l'enzyme.

5. Article moulé selon au moins une des revendications 1 à 4, **caractérisé en ce** qu'il contient
97 à 70 % en poids de fibres, et
3 à 30 % en poids de pâte de pommes de terre, traitée au préalable.

6. Article moulé selon au moins une des revendications 1 à 4, **caractérisé en ce** qu'il contient
90 à 80 % en poids de fibres, et
10 à 20 % en poids de pâte de pommes de terre, traitée au préalable.

7. Article moulé selon la revendication 1, **caractérisé en ce** que les particules de la pâte de pommes de terre sont soumises à une fragmentation préparatoire à une grandeur moyenne de particules de moins de 300 µm.

8. Procédé à produire un article moulé selon au moins une des revendications 1 à 7, **caractérisé en ce** que
la fibre est mise en contact avec la pâte traitée au préalable, moyennant des processus connus comme l'immersion ou la pulvérisation,
en ce qu'une opération de préséchage est réalisée, si nécessaire, afin de réduire l'humidité résiduelle à un niveau plus bas que 100 % en poids,
en ce que la matière est répandue, en formant une natte, est peignée et soumise à une précompression, si nécessaire, et
subit une compression sous l'effet de la chaleur et de pression pour la formation d'un article moulé.

9. Procédé selon la revendication 8, **caractérisé en ce** que la compression est réalisée à une température entre 160 et 200 °C et sous une pression de 2.94 x 10⁷ Pa (30 kp/cm²).

10. Procédé de traitement préparatoire de la pâte de pommes de terre utilisée, **caractérisé en ce** qu'on réalise une fragmentation mécanique avant et/ou après le traitement par des enzymes.

11. Procédé selon la revendication 10, **caractérisé en ce** que la fragmentation mécanique se fait dans un broyeur ou dans un homogénéisateur.

12. Procédé selon la revendication 8, **caractérisé en ce** que l'opération de préséchage est réalisée afin de réduire l'humidité résiduelle à un niveau plus bas que 50 % en poids.
